**Europäisches Patentamt**

**European Patent Office**

**Office européen des brevets**

(19)

(11) Veröffentlichungsnummer: **0 099 526**
**B1**

(12) **EUROPÄISCHE PATENTSCHRIFT**

(45) Veröffentlichungstag der Patentschrift:
**05.11.86**

(21) Anmeldenummer: **83106702.0**

(22) Anmeldetag: **08.07.83**

(51) Int. Cl.⁴: **B 62 D 33/06, F 16 F 9/10**

(54) **Federelastische Aufhängung zur Lagerung insbesondere eines Fahrerhauses auf einem Fahrzeugchassis.**

(30) Priorität: **19.07.82 US 399636**

(43) Veröffentlichungstag der Anmeldung:
**01.02.84 Patentblatt 84/5**

(45) Bekanntmachung des Hinweises auf die Patenterteilung:
**05.11.86 Patentblatt 86/45**

(84) Benannte Vertragsstaaten:
**AT DE FR GB IT SE**

(56) Entgegenhaltungen:
**FR-A-2 214 070**
**FR-A-2 384 996**
**FR-A-2 422 869**
**GB-A-610 959**
**GB-A-2 054 486**
**US-A-2 524 405**
**US-A-4 186 930**
**US-A-4 265 328**

**AUTOMATIVE ENGINEERING, Band 89, Nr. 8, August 1981, Seiten 90-92, Troy, JACK YAMAGUCHI: "Isuzu's new coupe incorporates electronic and electric features"**

(73) Patentinhaber: **DEERE & COMPANY, 1 John Deere Road, Moline Illinois 61265 (US)**

(72) Erfinder: **Obadal, Richard Dick, 2622 Sunset Blvd., Cedar Falls Iowa 50613 (US)**

(74) Vertreter: **Gramm, Werner, Dipl.- Ing., Patentanwälte Gramm + Lins Theodor- Heuss- Strasse 2, D-3300 Braunschweig (DE)**

EP 0 099 526 B1

**Beschreibung**

Die Erfindung betrifft eine federelastische Aufhängung zur Lagerung eines ersten Teiles auf einem zweitel Teil, insbesondere eines Fahrerhauses auf einem Fahrzeugchassis, bestehend aus einem Gehäuse, das mit dem zweiten Teil fest verbunden ist und in seiner Oberseite eine Durchtrittsöffnung aufweist, durch die ein Schaft ragt, der mit seinem einen Ende am ersten Teil befestigt ist und mit seinem gegenüberliegenden Ende innerhalb des Gehäuses durch ein erstes und ein zweites elastisches Teil gehalten ist, die stramm in das Gehäuse eingesetzt sind und zwischen sich eine erste Flüssigkeitskammer bilden, mit der eine zweite Flüssigkeitskammer über ein Ventil zur Regulierung des Flüssigkeitsstromes zwischen diesen beiden Flüssigkeitskammern in flüssigkeitsaustauschender Verbindung steht, wobei das erste elastische Teil eine Öffnung aufweist, durch die der genannte Schaft ragt.

Eine derartige Ausführungsform läßt sich der GB-A-610 959 entnehmen. Es handelt sich hier um eine Vibrationen absorbierende Aufhängung, deren topfförmig ausgebildetes Gehäuse oben offen ist. Der Schaft erstreckt sich zentrisch durch das Gehäuse, ragt durch dessen Boden hindurch und ist mit einer unterhalb des Gehäusebodens liegenden Dämpfungsscheibe aus elastischem Material verbunden. Die beiden elastischen Teile sind jeweils ringförmig ausgebildet und mit Abstand voneinander so in den unteren bzw. oberen Abschnitt des Gehäuses eingepreßt, daß sie mit ihrem äußeren Umfang flüssigkeitsdicht an der Gehäuseinnenwandung und mit ihrem inneren Umfang flüssigkeitsdicht an der äußeren Mantelfläche des genannten Schaftes anliegen. Sollte die in radialer Richtung wirkende Kompression dieser beiden elastischen Teile zur Abdichtung nicht ausreichen, können die elastischen Teile mit dem Gehäuse bzw. Schaft auch verklebt sein. Zwischen den beiden elastischen Teilen werden die beiden Flüssigkeitskammern durch starre Formringe gebildet. Die flüssigkeitsaustauschende Verbindung erfolgt über den hohl ausgebildeten Innenraum des Schaftes, in den auch das genannte Ventil eingebaut ist. Zur Veränderung der federelastischen Eigenschaften kann sich der Schaft mit einem schmalen, konusförmig ausgebildeten Ringbund auf der Oberseite des im oberen Gehäuseabschnitt eingebauten elastischen Teils abstützen.

Bei dieser vorbekannten Lösung sind somit die beiden elastischen Teile im wesentlichen nur kraftschlüssig mit dem Schaft verbunden; ein Formschluß ergibt sich nur über die schmale, konusförmig ausgebildete Ringschulter des Schaftes und auch nur in einer Richtung. Diese Aufhängung ist daher nicht zur Aufnahme großer Lasten, insbesondere nicht zur Lagerung eines Fahrerhauses auf einem Fahrzeugchassis geeignet. Nach oben gerichtete Belastungen können überhaupt nur über den Reibschluß zwischen Schaft, elastischen Elementen und Gehäuse aufgenommen und übertragen werden. Um nach oben gerichtete Schwingbewegungen überhaupt nennenswert abdämpfen zu können, ist die außerhalb des genannten Gehäuses angeordnete Dämpfungsscheibe vorgesehen. Nachteilig ist darüber hinaus der aufwendige und dementsprechend kostspielige Aufbau der Aufhängung bedingt durch die hohle Ausbildung des Schaftes sowie dadurch, daß der Schaft durch den Boden des Gehäuses geführt ist und an dieser Stelle einer besonderen Flüssigkeitsabdichtung bedarf.

Eine vergleichbare Ausführungsform läßt sich einer Veröffentlichung in "Automative Engineering", Vol. 89, Nummer 9, Seiten 91 und 92 entnehmen. Es handelt sich um die Aufhängung eines Motors.

Federelastische Aufhängungen zur Lagerung eines Fahrerhauses auf einem Fahrzeugchassis sind in zahlreichen Ausführungsformen bekannt (siehe beispielsweise US-Patente 4,271,921; 4,265,328 und 4,186,930). Keine dieser Ausführungsformen konnte jedoch befriedigen insbesondere hinsichtlich einer Dämpfung der niederfrequenten Vibration im Bereich von 4 bis 8 Hertz.

Der Erfindung liegt die Aufgabe zugrunde, die eingangs beschriebene federelastische Aufhängung so zu verbessern, daß sie insbesondere zur Lagerung eines Fahrerhauses auf einem Fahrzeugchassis geeignet ist und eine Dämpfung vor allem der niederfrequenten Virbration ermöglicht.

Diese Aufgabe wird gemäß der Erfindung durch folgende Merkmale gelöst:

a) Der Schaft ist mit seinem in das Gehäuse ragenden Ende an einem Formteil befestigt;

b) das erste und zweite elastische Teil sind ober- bzw. unterhalb des genannten Formteiles eingesetzt;

c) das zweite elastische Teil weist zumindest einen Flüssigkeitsdurchgang auf, der durch die genannte zweite Flüssigkeitskammer gebildet ist.

Die beiden elastischen Teile können aus Gummi o.dergl. bestehen. Es handelt sich also um eine hydraulisch gedämpfte Gummiaufhängung, wobei jede Bewegung des genannten Schaftes im Gehäuse zu einer Verformung des unteren elastischen Teiles und damit auch zu einer Querschnittsveränderung im Flüssigkeitsdurchgang dieses unteren elastischen Teiles führt. Das Ventil dient zur Flüssigkeitsregulierung bei jeder Verschiebung des Schaftes gegenüber dem Gehäuse. Dabei führen die beiden elastischen Teile in Verbindung mit der Flüssigkeitsverdrängung sowohl zu einer seitlichen als auch zu einer vertikalen Dämpfung z.B. des Fahrerhauses gegenüber dem Fahrzeugchassis.

In einer ersten Ausführungsform kann das Ventil aus einem vertikal beweglichen Ring bestehen, der mehrere Axialbohrungen aufweist, von denen zumindest einige mit den im zweiten elastischen Teil vorgesehenen Flüssigkeitsdurchgängen fluchten.

Oberhalb des genannten Ventils zwischen dem ersten und zweiten elastischen Teil kann ein luftdurchlässiges Teil angeordnet sein das zusammengedrückt wird, wenn Flüssigkeit aufgrund einer Verformung der elastischen Teile verdrängt wird. Die Flüssigkeitsverdrängung erfolgt jeweils durch Verschiebung des genannten Schaftes relativ gegenüber dem Gehäuse.

Eine alternative Ausführungsform kann durch folgende Merkmale gekennzeichnet sein:

a) Das Formteil weist eine Durchgangsbohrung auf, die über ebenfalls im Formteil angeordnete Radialkanäle in flüssigkeitsaustauschender Verbindung mit der äußeren Peripherie des Formteiles steht;

b) in der Durchgangsbohrung ist das genannte Ventil angeordnet, das über einen Kanal kleinen Durchmessers eine ständige flüssigkeitsaustauschende Verbindung mit der Durchgangsbohrung herstellt;

c) die Flüssigkeitskammer steht mit der Durchgangsbohrung über einige der genannten Radialkanäle in Verbindung; und

d) der Flüssigkeitsdurchgang im zweiten elastischen Teil fluchtet mit der Durchgangsbohrung im Formteil.

Eine Verschiebung des Schaftes relativ gegenüber dem Gehäuse führt zu einer Verformung der elastischen Teile und damit zu einem Flüssigkeitsstrom durch das genannte Ventil und die Radialkanäle hindurch, was zu der erwünschten Dämpfung führt. Dabei können im zweiten elastischen Teil Kammern vorgesehen sein die mit einigen der Radialkanäle fluchten und in flüssigkeitsaustauschender Verbindung stehen. Eine Verformung des zweiten elastischen Teiles führt dann zu einer Flüssigkeitsströmung von den genannten Kammern, durch die Radialkanäle in die Durchgangsbohrung.

Es können mehrere obere und untere Radialkanäle vorgesehen sein, wobei die oberen Radialkanäle vorzugsweise von der Flüssigkeitskammer ausgehen und schräg nach unten zum Ventil verlaufen. Dadurch wird sichergestellt, daß die Aufhängung auch dann zufriedenstellend arbeitet, wenn sie aus ihrer aufrechten Vertikalstellung in eine geneigte Stellung verschwenkt wird.

Das zweite elastische Teil kann zusätzlich mehrere, in seiner unteren Oberfläche angeordnete Radialdurchgänge aufweisen, die mit seinem Flüssigkeitsdurchgang in Verbindung stehen und ihren Querschnitt verändern, wenn das zweite elastische Teil gegen das Gehäuse gepreßt wird. Wird also der Schaft in das Gehäuse eingedrückt, und wird dadurch das zweite elastische Teil durch das Formteil verformt, dann werden auch die genannten Radialdurchgänge zusammengedrückt, so daß die in ihnen enthaltene Flüssigkeit zusätzlich durch das Ventil gedrückt wird; dies führt zu einer zusätzlichen Dämpfung.

Weitere Merkmale der Erfindung sind Gegenstand der Unteransprüche und werden mit weiteren Vorteilen anhand von Ausführungsbeispielen erläutert.

In der Zeichnung sind einige als Beispiele dienende Ausführungsformen der Erfindung dargestellt. Es zeigen:

Figur 1 in schematischer gestrichelter Darstellung die Seitenansicht eines Traktors mit der Anordnung der erfindungsgemäßen federelastischen Aufhängungen;

Figur 2 in vergrößertem Maßstab einen Längsschnitt durch eine federelastische Aufhängung gemäß der Linie 2 - 2 in Figur 3;

Figur 3 einen Querschnitt gemäß der Linie 3 - 3 in Figur 2;

Figur 4 in vergrößertem Maßstab einen Ausschnitt der in Figur 2 dargestellten Flüssigkeitskammer mit einer zusätzlichen Anordnung;

Figur 5 eine abgewandelte Ausführungsform in einer Darstellung gemäß Figur 2 nach der Schnittlinie 5 - 5 in Figur 6;

Figur 6 einen Querschnitt gemäß der Linie 6 - 6 in Figur 5 und

Figur 7 einen Querschnitt entlang der Schnittlinie 7 - 7 in Figur 5.

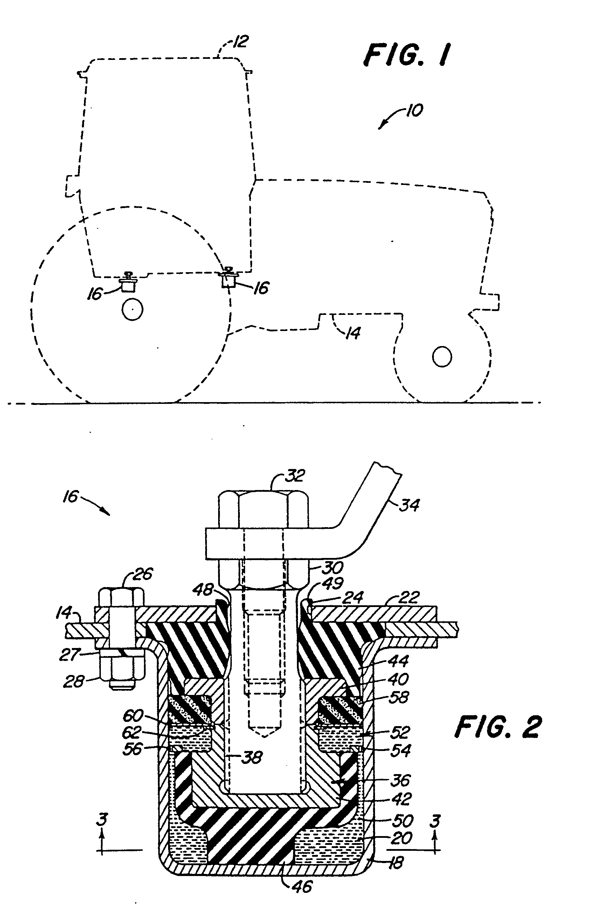

Figur 1 zeigt einen Traktor 10 mit einem Fahrerhaus 12, das auf einem Chassis 14 über federelastische Aufhängungen 16 montiert ist. Vorzugsweise sind vier derartige Aufhängungen 16 vorgesehen und zwar jeweils in einer unteren Ecke des Fahrerhauses 12.

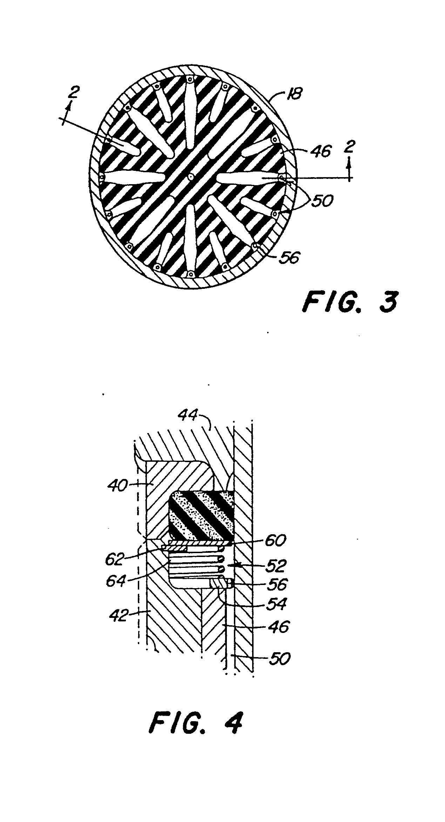

Gemäß den Figuren 2 und 3 besteht jede Aufhängung 16 aus einem becherförmigen Gehäuse 18, das eine festgelegte Menge einer Flüssigkeit 20 einschließt. Lediglich zur Vereinfachung, nicht aber zur Einschränkung wird die Aufhängung 16 nachfolgend in ihrer aufrechten Stellung gemäß Figur 2 beschrieben. Das Gehäuse 18 ist auf seiner Oberseite mit einem Deckel 22 verschlossen, der eine vergrößerte zentrale Öffnung 24 aufweist. Gehäuse 18 und Deckel 22 sind über Bolzen 26, Federringe 27 und Muttern 28 mit dem Chassis 14 verschraubt.

Das eine Ende eines Schaftes 30 ist mit einem Schraubbolzen 32 an einem Bügel 34 befestigt, der sich von dem Fahrerhaus 12 nach außen erstreckt. Das gegenüberliegende Ende des Schaftes 30 ragt durch die vergrößerte zentrale Öffnung 24 im Deckel 22 des Gehäuses 18 hindurch und ist in eine Gewindebohrung 38 eines Formteiles 36 eingeschraubt. Die genannte Öffnung 24 ist dabei so groß gewählt, daß eine seitliche Bewegung des Schaftes 30 ohne Berührung des Deckels 22 möglich ist. Das Formteil 36 ist vollständig innerhalb des Gehäuses 18 eingeschlossen, besteht vorzugsweise aus Metall und weist einen Außendurchmesser auf, der kleiner ist als der Innendurchmesser des Gehäuses 18. Aus Montagegründen ist es zweckmäßig, das Formteil 36 aus einem oberen Teil 40 und einem unteren Teil 42 zusammenzufügen.

Die Aufhängung 16 weist ferner zwei elastische Teile 44, 46 auf, die stramm in das Gehäuse 18 so eingepaßt sind, daß das erste elastische Teil 44 oberhalb und das zweite elastische Teil 46 unterhalb des Formteiles 36 liegen. Das erste elastische Teil 44 weist eine Öffnung 48 sowie einen buchsenförmigen Abschnitt 49 auf, der durch die Öffnung 24 des Gehäusedeckels 22 hindurchragt und die seitlichen Bewegungen des Schaftes 30 relativ gegenuber dem Gehäusedeckel 22 abfedert. Das zweite elastische Teil 46 umfaßt zumindest einen, vorzugsweise aber mehrere Flüssigkeitsdurchgänge 50 (siehe Figur 3), die so ausgebildet sind, daß sie bei Druckausübung auf das elastische Teile 46 Größe und Form verändern. Die exakte Form und Größe der Flüssigkeitsdurchgänge 50 kann in Abhängigkeit des erwünschten Dämpfungsgrades variieren.

Die elastischen Teile 44, 46 können aus jedem geeigneten federelastischen Material bestehen, wobei bevorzugt Gummi Verwendung findet. Jedoch muß darauf geachtet werden, daß die in der Aufhängung verwendete Flüssigkeit 20 sich mit dem elastischen Material verträgt. Bestehen die beiden elastischen Teile 44, 46 aus Gummi, so ist es zweckmäßig, das Gummi unmittelbar am Formteil 36 zu verkleben, um ein Flüssigkeitsleck zwischen den beiden Teilen zu vermeiden.

Die beiden elastischen Teile 44, 46 sind im Abstand voneinander angeordnet und bilden zwischen sich zusammen mit dem Formteil 36 und der Innenwandung des Gehäuses 18 eine Flüssigkeitskammer 52. Letztere steht in ständigem Flüssigkeitsaustausch mit den Flüssigkeitsdurchgängen 50 im zweiten elastischen Teil 46. Innerhalb der Flüssigkeitskammer 52 ist ein Ventil 54 in Form eines Ringes angeordnet, der zahlreiche axiale Drosselbohrungen 56 aufweist, die einen ständigen offenen Strömungsdurchgang durch das Ventil 54 sicherstellen, so daß Flüssigkeit aus den Flüssigkeitsdurchgängen 50 durch das Ventil 54 hindurch in die Flüssigkeitskammer 52 strömen kann oder aber umgekehrt. Da zahlreiche Drosselbohrungen 56 vorgesehen sind, werden immer einige von ihnen mit einigen der Flüssigkeitsdurchgänge 50 ständig fluchten. Der Außendurchmesser des Ventils 54 kann kleiner sein als der Innendurchmesser des Gehäuses 18, so daß ein Strömungsdurchtritt am Außenumfang des Ventils 54 möglich ist. Außerdem kann sich das Ventil 54 dadurch in vertikaler Richtung innerhalb der Flüssigkeitskammer 52 frei bewegen, wenn am Ventil eine Druckdifferenz besteht. Diese ergibt sich dann, wenn die elastischen Teile 44, 46 aufgrund einer seitlichen oder vertikalen Verschiebung des Schaftes 30 relativ gegenüber dem Gehäuse 18 verformt werden.

Ebenfalls in der Flüssigkeitskammer 52 ist oberhalb des Ventils 54 ein luftdurchlässiges Teil 58 angeordnet, das in seiner Lage durch ein Gitter 60 fixiert ist, das seinerseits am Formteil 36 durch einen Federring 62 gehalten ist. Das luftdurchlässige Teil 58 bildet einen volumetrischen Luftspalt und muß kompressibel sein. Als Materialien für das luftdurchlässige Teil 58 können offenzellige und geschlossenzellige Schaummaterialien Verwendung finden wie z.B. Styrene, Polystyrene, Styroschaum u.dgl. Das luftdurchlässige Teil 58 kann auch zumindest teilweise Flüssigkeit absorbieren und dient zur Bildung eines Raumes, in den Flüssigkeit verdrängt werden kann.

Nach dem Zusammensetzen der Aufhängung 16 sollte der Pegel der Flüssigkeit 20 etwa mit dem Boden des luftdurchlässigen Teils 58 gleich sein. Dadurch wird sichergestellt, daß ausreichend Flüssigkeit vorhanden ist, um die elastischen Teile 44, 46 zu unterstützen bei der Dämpfung von Vibrationen und Oszillationen, die auf das Fahrerhaus 12 ausgeübt werden; dabei handelt es sich insbesondere um niederfrequente Vibrationen im Bereich 8 bis 12 Hertz.

Auch wenn der Traktor 10 in geneigter Stellung arbeitet, ist ein Dämpfung sichergestellt, soweit Flüssigkeit 20 in der Flüssigkeitskammer 52 vorhanden ist.

Figur 4 zeigt eine Feder 64, die in der Flüssigkeitskammer 52 zwischen Ventil 54 und Gitter 60 angeordnet ist. Die Feder 64 drückt ständig das Ventil 54 in seine untere Stellung, ist aber nicht stark genug um ein Anheben des Ventils 54 zu verhindern, wenn der Flüssigkeitsdruck unterhalb des Ventils 54 einen vorbestimmten Wert erreicht. Die Feder 64 stellt ferner sicher, daß sich das Ventil 54 nicht in einer geöffneten Stellung, entfernt von dem zweiten elastischen Teil 46 festsetzt.

Die in den Figuren 1 bis 4 dargestellte Aufhängung 16 arbeitet wie folgt:

Ausgehend von einer Stellung, in der sich alle Räder des Traktors 10 auf ebenem Boden befinden, wird die Wirkungsweise beschrieben für den Fall, daß die hinteren Räder in eine Vertiefung fallen. Dieser Vorgang führt zu einer Abwärtsbewegung des Chassis 14 zusammen mit dem Fahrerhaus 18. Diese Abwärtsbewegung ändert augenblicklich das die Fahrerkabine 12 in Position halten, de Kräftegleichgewicht; das Gewicht der Fahrerkabine 12 drückt auf den Schaft 30 und das Formteil 36. Diese abwärts gerichtete Kraft drückt das zweite elastische Teil 46 zusammen und quetscht es nach außen, da es von oben unter Druck gesetzt und von unten durch den Boden des Gehäuses 18 abgestützt wird. Dadurch wird die in den Flüssigkeitsdurchgängen 50 enthaltene Flüssigkeit 20 nach oben verdrängt und hebt das Ventil 54 von seinem Sitz ab. Die aufgrund der Verformung des zweiten elastischen Teiles 46 in die Flüssigkeitskammer 52 verdrängte Flüssigkeit 20 führt zu einer Komprimierung des luftdurchlässigen Teiles 58.

Das Fahrerhaus 12 wird abgefedert durch die Verformung des elastischen Teiles 46 und durch den gedrosselten Fluß der Flüssigkeit 20 um das Ventil 54 herum. Diese beiden Vorgänge dämpfen die Vibrationen, die sich sonst unmittelbar auf das Fahrerhaus 12 übertragen würden.

Wenn nun die Hinterräder des Traktors 10 aus der Vertiefung wieder herausrollen, übt das zweite elastische Teil 46 eine nach oben gerichtete Kraft auf den Schaft 30 aus, wenn es versucht, seine ursprüngliche Form wieder einzunehmen. Gleichzeitig wird das Formteil 36 nach oben gedrückt und verformt das erste elastische Teil 44. Aufgrund der Aufwärtsbewegung des zweiten elastischen Teiles 46 ergibt sich eine Vergrößerung der Flüssigkeitsdurchgänge 50, wodurch die in der Flüssigkeitskammer 52 enthaltene Flüssigkeit 20 durch die Drosselöffnungen 56 hindurch fließt. Diese Strömungsgeschwindigkeit erfolgt aber mit reduzierter Geschwindigkeit im Vergleich zu der nach oben gerichteten Strömung der Flüssigkeit 20 in die Flüssigkeitskammer 52 hinein, da das Ventil 54 aufgrund des gegen seine obere Seite wirkenden höheren Drucks seinen Schließsitz einnimmt. Dadurch werden der schnelle Abfall der Hinterräder des Traktors 10 in die Vertiefung sowie ihre langsame Aufwärtsbewegung gegenüber dem Fahrer des Fahrzeuges abgefedert. Erreicht der Traktor 10 wieder ebenen Boden, kehren auch die Aufhängungen 16 in ihre neutrale, in Figur 2 dargestellte Position zurück.

Seitliche Bewegungen des Fahrerhauses 12 relativ gegenüber dem Chassis 14 werden durch eine Horizontalbewegung der elastischen Teile 44, 46 gedämpft. Wird z.B. das zweite elastische Teil 46 gegen die rechte Innenwandung des Gehäuses 18 gepreßt, wird die Flüssigkeit 20, die sich in dem auf der rechten Seite der Aufhängung 16 befindlichen Flüssigkeitsdurchgang 50 befindet, nach oben gedrückt; gleichzeitig expandieren die in der linken Seite der Aufhängung 16 angeordneten Flüssigkeitsdurchgänge 50. Dies führt zu einem Druckabfall am Ventil 54, wobei die Flüssigkeit 20 in der Flüssigkeitskammer 52 den höheren Druck aufweist. Wenn die Flüssigkeit 20 durch die Drosselöffnungen 56 zurückströmt, erfolgt eine Dämpfung der seitlichen, auf das Fahrerhaus 12 wirkenden Vibrationen.

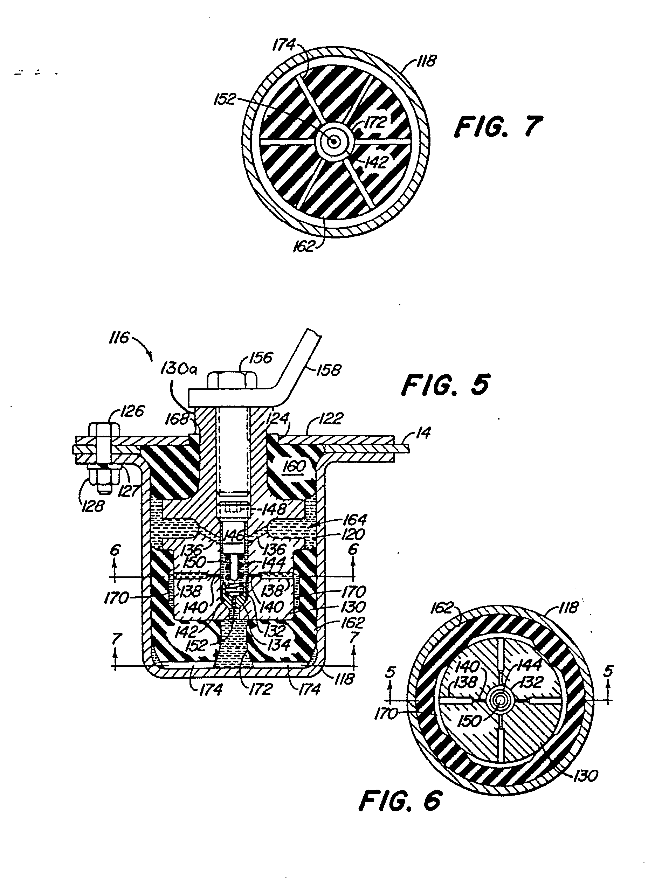

Alternative Ausführungsform: Die Figuren 5 bis 7 zeigen eine alternative Aufhängung 116 mit einem ebenfalls becherförmig ausgebildeten Gehäuse 118, das eine bestimmte Menge an Flüssigkeit 120 umschließt. Das Gehäuse 118 ist von einem Deckel 122 mit einer vergrößerten mittigen Öffnung 124 verschlossen, wobei Gehäuse 118 und Deckel 122 mit dem Chassis 14 über Bolzen 126, Federringe 127 und Muttern 128 verbunden sind.

Innerhalb des Gehäuses 118 ist ein Formteil 130 mit einer Durchgangsbohrung 132 angeordnet, die mit der Öffnung 124 im Deckel 122 fluchtet und eine kegelförmige Schulter 134 aufweist, die als Ventilsitz dient. Das Formteil 130 umfaßt zahlreiche obere und untere Radialkanäle 136, 138, die sich ausgehend von der Durchgangsbohrung 132 zur äußeren Peripherie des Formteils 130 in der Art von Speichen eines Rades erstrecken. Die oberen Radialkanäle 136 sind ausgehend von der äußeren Peripherie des Formteils 130 nach unten geneigt in Richtung auf die genannte Schulter 134. Die unteren Radialkanäle 138 weisen jeweils eine Drosselstelle 140 auf, die zur Drosselung des Flüssigkeitsstromes dient und vorzugsweise unmittelbar neben der Durchgangsbohrung 132 angeordnet ist.

Innerhalb der Durchgangsbohrung 132 ist ein Ventil 142 angeordnet, das in seiner Schließstellung auf der Ringschulter 134 aufliegt, vorzugsweise als Kegelventil ausgebildet ist und von eine Feder 144 nach unten gedrückt wird, die von einer Justierschraube 146 in ihrer Lage gehalten wird. Letztere weist einen Schraubenkopf 148 auf, in den ein Schraubenschlüssel gesteckt werden kann, so daß sich die Justierschraube 146 weiter in die Durchgangsbohrung 132 hineindrehen läßt, um so die Spannung der Feder 144 zu justieren. Die Justierschraube 146 umfaßt ferner einen nach unten ragenden Zapfen 150, der als Führung für die Feder 144 dient und deren Ausknicken verhindert.

Das Ventil 142 weist einen Kanal 152 kleinen Durchmessers auf, der eine ständige Strömungsverbindung durch das Ventil 142 hindurch sicherstellt. Das Ventil 142 ist beweglich zwischen einem Schließsitz, in dem Flüssigkeitsstrom an der Ringschulter 134 vorbei verhindert wird, und einer angehobenen Position, in der Flüssigkeitsströmung an der Ringschulter 134 vorbei freigegeben ist.

Das Formteil 130 geht nach oben über in einen Schaft 130a, an dessen oberen Ende über einen Schraubbolzen 156 ein Bügel 158 befestigt ist, der seinerseits an dem Fahrerhaus 12 festgelegt ist. Die zentrale Öffnung 124 im Gehäusedeckel 122 ist größer als der Außendurchmesser des Schaftteiles 130a, das somit eine seitliche Bewegung relativ gegenüber dem Gehäuse 118 ausführen kann.

Die Aufhängung 116 umfaßt ferner ein erstes und ein zweites elastisches Teil 160, 162, das oberhalb bzw. unterhalb des Formteiles 130 angeordnet ist und vorzugsweise aus Gummi besteht. Die elastischen Teile 160,162 sind stramm in das Gehäuse 118 eingesetzt und bilden zwischen sich eine Flüssigkeitskammer 164, die in flüssigkeitsaustauschender Verbindung steht mit den oberen Radialkanälen 136, deren geneigte Anordnung eine Verschwenkung der Aufhängung 116 aus ihrer Vertikalstellung bei Aufrechterhaltung der hydraulischen Dämpfung zuläßt. Es ist praktisch unmöglich, zwischen der Flüssigkeitskammer 164 und der Durchgangsbohrung 132 ein Luftkissen anzuordnen.

Das erste elastische Teil 160 ist mit einem buchsenförmigen Teil 168 versehen, das sich nach oben durch die zentrale Öffnung 124 im Gehäusedeckel 122 erstreckt und seitliche Bewegungen des Schaftteiles 130a abfedert und einen unmittelbaren Kontakt dieses Schaftteiles mit dem Deckel 122 verhindert. Das zweite elastische Teil 162 weist zahlreiche Kammern 170 auf, die mit den unteren Radialkanälen 138 fluchten und mit diesen in flüssigkeitsaustauschender Verbindung stehen. Zusätzlich weist das zweite elastische Teil 162 einen Flüssigkeitsdurchgang 172 auf, der mit der Durchgangsbohrung 132 fluchtet; außerdem sind in der unteren Bodenfläche des zweiten elastischen Teils 162 zahlreiche Radialkanäle 174 vorgesehen, die sich vom Flüssigkeitsdurchgang 172 in die äußere Peripherie des zweiten elastischen Teiles 162 erstrecken.

Wird das zweite elastische Teil 162 aufgrund einer Verschiebung des Formteiles 130 verformt, so ändern auch die Kammern 170 sowie die Flüssigkeitsdurchgänge 172, 174 ihre Größe, wodurch die in ihnen enthaltene Flüssigkeit 120 durch das Ventil 142 hindurch verdrängt wird, wo es einer Drosselung unterliegt, um so eine hydraulische Dämpfung zu erzeugen.

Die Elastizität der beiden Teile 160, 162 ist zusammen mit dem Dämpfungseffekt der durch das Ventil 142 strömenden Flüssigkeit 120 insbesondere nützlich für eine Dämpfung der niederfrequenten Vibrationen. Zusätzlich führt die Aufhängung 116 sowohl zu einer seitlichen als auch zu einer lotrechten Dämpfung.

Die Arbeitsweise der federelastischen Aufhängung 116 ist ähnlich der der oben beschriebenen Wirkungsweise der Aufhängung 16 und erfordert daher keine zusätzlichen Erläuterungen.

**Patentansprüche**

Federelastische Aufhängung (16; 116) zur Lagerung eines ersten Teiles (12) auf einem zweiten Teil (14), insbesondere eines Fahrerhauses auf einem Fahrzeugchassis, bestehend aus einem Gehäuse (18; 118), das mit dem zweiten Teil (14) fest verbunden ist und in seiner Oberseite (22; 122) eine Durchtrittsöffnung (24; 124) aufweist, durch die ein Schaft (30; 130a) ragt, der mit seinem einen Ende am ersten Teil (12) befestigt ist und mit seinem gegenüberliegenden Ende innerhalb des Gehäuses (18; 118) durch ein erstes (44; 160) und ein zweites (46; 162) elastisches Teil gehalten ist, die stramm in das Gehäuse (18; 118) eingesetzt sind und zwischen sich eine erste Flüssigkeitskammer (52; 164) bilden, mit der eine zweite Flüssigkeitskammer über ein Ventil (54; 142) zur Regulierung des Flüssigkeitsstromes zwischen diesen beiden Flüssigkeitskammern in flüssigkeitsaustauschender Verbindung steht, wobei das erste elastische Teil (44; 160) eine Öffnung (48; 168) aufweist, durch die der genannte Schaft (30; 130a) ragt,
gekennzeichnet durch folgende Merkmale:
a) Der Schaft (30; 130a) ist mit seinem in das Gehäuse (18; 118) ragenden Ende an einem Formteil (36; 130) befestigt;

b) das erste und zweite elastische Teil (44, 46; 160, 162) sind ober- bzw. unterhalb des genannten Formteiles (36; 130) eingesetzt;

c) das zweite elastische Teil (46; 162) weist zumindest einen Flüssigkeitsdurchgang (50; 172) auf, der durch die genannte zweite Flüssigkeitskammer gebildet ist.

2. Aufhängung (16) nach Anspruch 1, dadurch gekennzeichnet, daß das Ventil (54) aus einem vertikal beweglichen Ring besteht, der mehrere Axialbohrungen (56) aufweist, von denen zumindest einige mit den im zweiten elastischen Teil (46) vorgesehenen Flüssigkeitsdurchgängen (50) fluchten.

3. Aufhängung (16) nach Anspruch 2, dadurch gekennzeichnet, daß oberhalb des genannten Ventils (54) zwischen dem ersten und zweiten elastischen Teil (44, 46) ein luftdurchlässiges Teil (58) angeordnet ist, das zusammengedrückt wird, wenn Flüssigkeit aufgrund einer Verformung der elastischen Teile (44, 46) verdrängt wird.

4. Aufhängung (16) nach Anspruch 3, dadurch gekennzeichnet, daß das luftdurchlässige Teil (58) aus einem geschlossenzelligen Material besteht.

5. Aufhängung (16) nach Anspruch 3, dadurch gekennzeichnet, daß das luftdurchlässige Teil (58) aus einem offenzelligen Material besteht.

6. Aufhängung (16) nach Anspruch 3, dadurch gekennzeichnet, daß das luftdurchlässige Teil (58) aus einem Schaummaterial besteht.

7. Aufhängung (16) nach einem der Ansprüche 3 bis 6, dadurch gekennzeichnet, daß ein Gitter (60) das luftdurchlässige Teil (58) in seiner Lage fixiert.

8. Aufhängung (16) nach einem der vorhergehenden Ansprüche, gekennzeichnet durch folgende Merkmale:
a) Das Gehäuse (18) ist becherförmig ausgebildet;
b) seine Durchtrittsöffnung (24) ist mittig angeordnet und verläuft axial;
c) der Schaft (30) ist mit seinem einen Ende in eine Gewindebohrung (38) des Formteiles (36) eingeschraubt;
d) die Flüssigkeitsdurchgänge (50) sind in der Peripherie des zweiten elastischen Teiles (46) angeordnet; und
e) das luftdurchlässige Teil (58) ist im Abstand vom zweiten elastischen Teil (46) gehalten.

9. Aufhängung (116) nach Anspruch 1, gekennzeichnet durch folgende Merkmale:
a) Das Formteil (130) weist eine Durchgangsbohrung (132) auf, die über ebenfalls im Formteil (130) angeordnete Radialkanäle (136,138) in flüssigkeitsaustauschender Verbindung mit der äußeren Peripherie des Formteiles (130) steht;
b) in der Durchgangsbohrung (132) ist das genannte Ventil (142) angeordnet, das über einen Kanal (152) kleinen Durchmessers eine ständige flüssigkeitsaustauschende Verbindung mit der Durchgangsbohrung (132) herstellt;
c) die Flüssigkeitskammer (164) steht mit der Durchgangsbohrung (132) über einige der genannten Radialkanäle (136) in Verbindung; und

d) der Flüssigkeitsdurchgang (172) im zweiten elastischen Teil (162) fluchtet mit der Durchgangsbohrung (132) im Formteil (130).

10. Aufhängung (116) nach Anspruch 9, dadurch gekennzeichnet, daß im zweiten elastischen Teil (162) Kammern (170) vorgesehen sind, die mit einigen der Radialkanäle (138) fluchten und in flüssigkeitsaustauschender Verbindung stehen.

11. Aufhängung (116) nach Anspruch 9 oder 10, dadurch gekennzeichnet, daß mehrere obere (136) und untere (138) Radialkanäle vorgesehen sind.

12. Aufhängung (116) nach Anspruch 11, dadurch gekennzeichnet, daß die oberen Radialkanäle (136) ausgehend von der Flüssigkeitskammer (164) schräg nach unten zum Ventil (142) verlaufen.

13. Aufhängung (116) nach Anspruch 11 oder 12, dadurch gekennzeichnet, daß die oberen und unteren Radialkanäle (136, 138) jeweil gleichen Umfangsabstand voneinander aufweisen.

14. Aufhängung (116) nach einem der Ansprüche 9 bis 13, dadurch gekennzeichnet, daß das Ventil (142) ein Kegelventil ist.

15. Aufhängung (116) nach Anspruch 14, dadurch gekennzeichnet, daß das Kegelventil (142) in eine Schließstellung gedrückt wird, in der der Strömungsfluß durch das Ventil reduziert ist.

16. Aufhängung (116) nach einem der Ansprüche 9 bis 15, gekennzeichnet durch folgende Merkmale:

a) Das Gehäuse (118) ist becherförmig ausgebildet;

b) seine Durchtrittsöffnung (124) ist mittig angeordnet und verläuft axial;

c) die axial verlaufende Durchgangsbohrung (132) weist eine Ringschulter (134) auf;

d) das Ventil (142) liegt in seiner Schließstellung auf der Ringschulter (134) auf und unterbricht Strömungsfluß um das Ventil (142) herum, den es bei angehobener Stellung freigibt; und

e) die Kammern (170) im zweiten elastischen Teil (162) sind mit den unteren Radialkanälen (138) verbunden.

17. Aufhängung (116) nach einem der Ansprüche 9 bis 16, dadurch gekennzeichnet, daß das zweite elastische Teil (162) mehrere in seiner unteren Oberfläche angeordnete Radialdurchgänge(174) aufweist, die mit dem Flüssigkeitsdurchgang (172) in Verbindung stehen und ihren Querschnitt verändern, wenn das zweite elastische Teil (162) gegen das Gehäuse (118) gepreßt wird.

**Claims**

1. A resilient mount (16; 116) for supporting a first member (12) on a second member (14), especially a cab structure on a chassis of a vehicle, said mount comprising a housing (18;118) securely attached to the second member (14) and having an opening (24; 124) in the top surface (22; 122) thereof a stem (38; 138a) passing through said opening and being attached at one end to said first menber (12) and held at its opposite end within the housing (18; 118) by first (44; 160) and second (46; 162) flexible menbers which are tightly fitted into said housing (18; 118) and form a first fluid cavity (52; 164) therebetween, a second fluid cavity being in fluid communication with said first fluid cavity via a valve (54; 142) for regulating fluid flow between said two fluid cavities, whereby said first flexible member (44; 168) has an opening (48; 168) said stem (30; 130a) passing therethrough, characterized by the following features:

a) Said stem (30; 130a) is attached with its end projecting into the housing (18; 118) to a fitting (36; 130);

b) said first and second flexible members (44, 46; 160, 162) are inserted above and below said fitting (36; 130) respectively;

c) said second flexible member (46; 162) has at least one fluid passage (50; 172) formed by said second fluid cavitiy.

2. The mount (16) according to claim 1, wherein said valve (54) includes a vertically movable ring having a plurality of axial bores (56), at least some of said bores being aligned with said fluid passages (50) formed in said-second flexible member (46).

3. The mount (16) according to claim 2, wherein an air permeable member (58) is positioned above said valve (54) between said first and second flexible members (44, 46), said air permeable member being compressed when fluid is displaced due to a deflection of said flexible members (44, 46).

4. The mount (16) according to claim 3, wherein said air permeable member (58) is a closed cell material.

5. The mount (16) according to claim 3, wherein the air permeable member (58) is an open cell material.

6. The mount (16) according to claim 3, wherein the air permeable member (58) is a foam material.

7. The mount (16) according to one of the claims 3 to 6 wherein a screen (60) retains said air permeable member (58) in its position.

8. The mount (16) according to one of the preceding claims, characterized by the following features:

a) Said housing (18) is cup-shaped;

b) its opening (24) is centrally positioned and axially aligned;

c) said stem (30) is threaded with one end into a threaded bore (38) of said fitting (36);

d) said fluid passages (50) are positioned in the periphery of said second flexible member (46); and

e) said air permeable member (58) is retained away from said second flexible member (46).

9. The mount (116) according to claim 1 characterized by the following features:

a) Said fitting (130) comprises a through-bore (132) providing fluid communication via radial passages (136,138) which are also positioned in the fitting (130) between said through-bore (132) and the outer periphery of said fitting (130).

b) said valve (142) is located in said through-bore (132) and has a small diameter passageway (152) providing constant fluid communication with said through-bore (132);

c) said fluid cavity (164) communicates with said through-bore (132) via some of said radial passages (136); and

d) said fluid passage (172) in the second flexible member (162) is aligned with the through-bore (132) in the fitting (130).

10. The mount (116) according to claim 9, wherein said second flexible member (162) has chambers (170) formed therein, which are aligned with some of said radial passages (138) and which are in fluid communication therewith.

11. The mount (116) according to claim 9 or 10, wherein a plurality of upper (136) and lower (138) radial passages are provided.

12. The mount (116) according to claim 11, wherein the upper radial passages (136) are slanted downward away from the fluid cavity (164) toward the valve (142).

13. The mount (116) according to claim 11 or 12, wherein said upper and lower radial passages (136,138) each have same circumferential distance from each other.

14. The mount (116) according to one of the claims 9 to 13, wherein the valve (142) is a poppet valve.

15. The mount (116) according to claim 14, wherein the poppet valve (142) is biased in a closing position in which the fluid flow across the valve is being reduced.

16. The mount (116) according to one of the claims 9 to 15, characterized by the following features:

a) The housing (118) is cup-shaped;

b) its opening (124) is centrally positioned and axially aligned;

c) the axially aligned through-bore (132) includes an annular shoulder (134);

d) in its closing position the valve (142) rests on the annular shoulder (134) and interrupts fluid flow around the valve (142) and permits fluid flow in the lifted position; and

e) the chambers (170) in the second flexible member (162) comnunicate with the lower radial passages (138).

17. The mount (116) according to one of the claims 9 to 16, wherein the second flexible member (162) has a plurality of radial passages (174) arranged in the lower surface thereof, these passages are in communication with said fluid passage (172) and vary in its crosssection when the second flexible member (162) is compressed against the housing (118).

**Revendications**

1.- Système de suspension élastique (16; 116) pour le montage d'un premier élément (12) sur un second élément (14), en particulier d'une cabine de conduite sur un châssis de véhicule, comportant un boîtier (18; 118) qui est relié rigidement au second élément (14) et qui présente dans sa face supérieure (22; 122) un orifice de passage (24; 124) par lequel fait saillie une tige (30; 130a) qui est fixée par l'une de ses extrémité sur le premier élément (12) et qui est retenue par son extrémité opposée, à l'intérieur du boîtier (18; 118), par un premier (44; 160) et un second (46; 162) éléments élastiques qui sont montés serrés dans le boîtier (18; 118) et qui forment entre eux une première chambre à liquide (52; 164) avec laquelle est en communication d'une manière permettant un échange de liquide une seconde chambre à liquide, par l'intermédiaire d'un clapet (54; 142), pour la régulation du courant de liquide entre ces deux chambres à liquide, le premier élément élastique (44; 168) comportant un orifice (48; 168) à travers lequel la tige mentionnée (30; 130a) fait saillie, caractérisé par les particularités suivantes:

a) la tige (38; 138a) est fixée par son extrémité faisant saillie dans le boitier (18; 118) sur une pièce de forme (36; 130);

b) le premier et le second éléments élastiques (44, 46; 160, 162) sont insérés au-dessus et au-dessous de la pièce de forme sus-mentionnée (36; 130);

c) le second élément élastique (46; 162) comporte au moins un passage pour le liquide (50; 172), qui est formé par la seconde chambre à liquide mentionnée.

2.- Système de suspension (16) suivant la revendication 1, caractérisé en ce que le clapet (54) est constitué par un anneau mobile verticalement, qui comporte plusieurs perçages axiaux (56) dont quelques-uns au moins coïncident avec les passages destinés au liquide (50) prévus dans le second élément élastique (46).

3.- Système de suspension (16) suivant la revendication 2, caractérisé en ce qu'il est prévu au-dessus du clapet mentionné (54), entre le premier et le second éléments élastiques (44, 46), un élément perméable à l'air (58), qui est comprimé quand du liquide est refoulé par suite d'une déformation des éléments élastiques (44, 46).

4.- Système de suspension (16) suivant la revendication 3, caractérisé en ce que l'élément perméable à l'air (58) est constitué par une matière cellulaire à cellules fermées.

5.- Système de suspension (16) suivant la revendication 3, caractérisé en ce que l'élément perméable à l'air (58) est constitué par une matière cellulaire à cellules ouvertes.

6.- Système de suspension (16) suivant la revendication 3, caractérisé en ce que l'élément perméable à l'air (58) est constitué par une matière sous forme de mousse.

7.- Système de suspension (16) suivant l'une des revendications 3 à 6, caractérisé en ce qu'une grille (60) maintient l'élément perméable à l'air (58) en place.

8.- Système de suspension (16) suivant l'une des revendications précédentes, caractérisé par les particularités suivantes:

a) le boîtier (18) a une forme de cuvette ou godet;

b) son orifice de passage (24) est disposé centralementet s'étend axialement;

c) la tige (30) est vissée par l'une de ses extrémités dans un taraudage (38) de la pièce de forme (36);

d) les passages destinés au liquide (50) sont ménagés dans la périphérie du second élément élastique (46); et

e) l'élément perméable à l'air (58) est maintenu écarté du second élément élastique (46).

9.- Système de suspension (116) suivant la revendication 1, caractérisé par les particularités suivantes:

a) la pièce de forme (130) présente un perçage de passage (132) qui communique d'une manière permettant un échange de liquide, par des canaux radiaux (136, 138) ménagés également dans la pièce de forme (130), avec la périphérie extérieure de cette pièce de forme (130);

b) le clapet mentionné (142) est disposé dans le perçage de passage (132), ce clapet établissant, par l'intermédiaire d'un canal (152) de petit diamètre, une communication permanente permettant un échange de liquide avec le perçage de passage (132);

c) la chambre à liquide (164) communique avec le perçage de passage (132) par quelques-uns des canaux radiaux mentionnés (136); et

d) le passage (172) prévu pour le liquide dans le second élément élastique (162) coïncide avec le perçage de passage (132) ménagé dans la pièce de forme (130).

10.- Système de suspension (116) suivant la revendication 9, caractérisé en ce que des chambres (170) sont prévues dans le second élément élastique (162), ces chambres coïncidant avec quelques-uns des canaux radiaux (138) et étant en communication avec eux d'une manière permettant un échange de liquide.

11.- Système de suspension (116) suivant la revendication 9 ou 10, caractérisé en ce qu'il est prévu plusieurs canaux radiaux supérieurs (136) et inférieurs (138).

12.- Système de suspension (116) suivant la revendication 11, caractérisé en ce que les canaux radiaux supérieurs (136) s'étendent depuis la chambre à liquide (164) et obliquement vers le bas en direction du clapet (142).

13.- Système de suspension (116) suivant la revendication 11 ou 12, caractérisé en ce que les canaux radiaux supérieurs et inférieurs (136, 138) sont écartés chaque fois l'un de l'autre d'une même distance dans le sens circonférentiel.

14.- Système de suspension (116) suivant l'une des revendications 9 à 13, caractérisé en ce que le clapet (142) est un clapet à pointeau.

15.- Système de suspension (116) suivant la revendication 14, caractérisé en ce que le clapet à pointeau (142) est repoussé en position de fermeture, dans laquelle le débit de passage est réduit par le clapet.

16.- Système de suspension (116) suivant l'une des revendications 9 à 15, caractérisé par les particularités suivantes:

a) le boîtier (118) a une forme de cuvette ou godet;

b) son orifice de passage (124) est disposé centralement et s'étend axialement;

c) le perçage de passage (132) orienté axialement présente un épaulement annulaire (134);

d) le clapet (142) repose, dans sa position de fermeture, sur l'épaulement annulaire (134) et interrompt le débit ou passage du liquide autour du clapet (142), passage qui est libéré dans la position relevée du clapet; et

e) les chambres (170) ménagées dans le second élément élastique (162) communiquent avec les canaux radiaux inférieurs (138).

17.- Système de suspension (116) suivant l'une des revendications 9 à 16, caractérisé en ce que le second élément élastique (162) comporte plusieurs passages radiaux (174) ménagés dans sa face inférieure, ces passages communiquant avec le passage (172) destiné au liquide et leur section droite variant quand le second élément élastique (162) est pressé contre le boîtier (118).

FIG. 1

FIG. 2

FIG. 3

FIG. 4

FIG. 7

FIG. 5

FIG. 6

5